# EUROPEAN PATENT APPLICATION

(11) **EP 2 043 072 A2**
(43) Date of publication of application: **01.04.2009**
(21) Application number: 08164680.4
(22) Date of filing: 19.09.2008
(51) Int. Cl.: G09B 9/04, G09B 19/16

(54) **Training device and method for learning to drive a means of transport**

(30) Priority: 20.09.2007 IT UD20070171
(71) Applicant: T&T Telematica E Trasporti S.r.l., 33050 Ruda (UD) (IT)
(72) Inventor: Caltabiano, Raffaele Antonio, 33050, Terzo d'Aquileia (UD) (IT)
(74) Representative: Petraz, Gilberto Luigi

(57) **Abstract**

A training device for learning to drive a means of transport, in particular public transport or heavy transport, comprises a data processing unit (13) to receive, from at least a means of transport (11) operating in real operating conditions, information relating to the real operating conditions; a training station (12) provided with devices simulating real driving instruments and display devices, to simulate a driving station of the means of transport (11). The means of transport (11) comprises data transmission devices (19), and the data processing unit (13) comprises data reception devices (20) to receive in real time the data transmitted by the means of transport (11) and to reproduce, in graphic and/or numerical form and in real time, the real operating conditions so as to condition the devices simulating real driving instruments and display devices of the training station (12), in order to simulate, in real time, the real operating conditions.

## Description

### FIELD OF THE INVENTION

The present invention concerns a training device for learning to drive a means of transport, ground and/or sea, advantageously a public or heavy means of transport.

In particular, the device is able to be used as a driving simulator to train drivers for means of transport used to transport persons, such as buses, taxis, trains, boats and other similar means, or to transport goods, such as trucks, vans, trains, boats or suchlike, or used in predefined routes to perform any service whatsoever.

### BACKGROUND OF THE INVENTION

Training devices are known, for learning to drive a means of transport used to transport persons, such as buses, taxis, or other similar vehicles, which comprise a training station connected to a central data processing unit. The training station comprises at least a display device and means to simulate driving a vehicle, for example a steering wheel and pedals. The data processing unit, managed by an instructor responsible for the training, transmits to said training station information, in graphic form, relating to a plurality of training scenarios which comprise both purely training situations - to evaluate the driving ability, promptness of reflexes and the trainee's attention when driving the means of transport - and also situations that simulate predefined settings where the trainee could find himself once qualified to actually drive the means of transport.

One disadvantage of known devices is that the training scenarios used are predefined and substantially always the same. Therefore, they do not train the trainee for real operating conditions, since they are in fact detached from the operating reality in which the means of transport which the trainee will later have to drive normally finds itself.

Purpose of the present invention is to achieve a training device for learning to drive a means of transport which allows to train drivers by simulating real operating conditions in which, once they take up service, the drivers will actually find themselves.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a training device for learning to drive means of transport used to transport persons, such as buses, taxis, trains, boats and other similar means, or to transport goods such as trucks, vans, trains boats or suchlike, or used in predefined routes to perform any service whatsoever, comprises a data processing unit equipped with data reception means able to receive, from one or more means of transport operating in real operating conditions and equipped with data transmission means, information relating to said real operating conditions, and a training station provided with means simulating the driving instruments, for example a steering wheel and pedals, and display means, to simulate a real driving station of said means of transport.

According to a characteristic feature of the present invention, the data processing unit is able to process the information transmitted by the means of transport actually functioning, and presents the operating conditions thereof in the field, in graphic and/or numerical form and in real time, providing the trainee operator a virtual representation of the real conditions. The latter comprise both the route that the means of transport is traveling, and also possible diversions to the route, either programmed or due to accidental events such as accidents, demonstrations, traffic jams or other similar critical situations.

In this way the trainee simulates the real driving of the means of transport not as an element divorced from operating reality, but in coordination with one or more means of transport that actually and in real time is or are performing the service.

According to a variant of the present invention, the real operating conditions are displayed on the display means.

Advantageously, the representation of the real operating conditions comprises a reproduction of two-dimensional and/or three-dimensional images that faithfully represent, in a virtual context, the routes and environmental contexts in which, in real time, the means of transport finds itself and in which, therefore, the trainee will have to operate.

In this way the device according to the invention can be used to train drivers already qualified to drive, but who do not know the area, the city or in general the operating area where they will have to work.

This allows to reduce the times and costs of training the drivers, allowing greater flexibility in activating new lines, routes and stops. Moreover, in this way the trainee is able to know in advance the route he will have to take, consequently reducing the delays that would be created during the first runs made by him along the new line.

The information relating to the real operating conditions of the means of transport also comprises numerical data relating to the journey time, possible delays accumulated along the route, fuel consumption of the means of transport or other similar information.

According to a variant of the present invention, the training station is also able to transmit to the data processing unit other information relating to possible accidental situations in which the trainee might be involved during the simulation, such as accidents or obstacles along the route, mechanical problems or other similar situations.

In this way the trainee is also trained to manage critical situations that happen in real time.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a block diagram of a device according to the present invention;
- fig. 2 is a block diagram of a detail of the device in fig. 1.

### DETAILED DESCRIPTION OF A PREFERENTIAL FORM OF EMBODIMENT

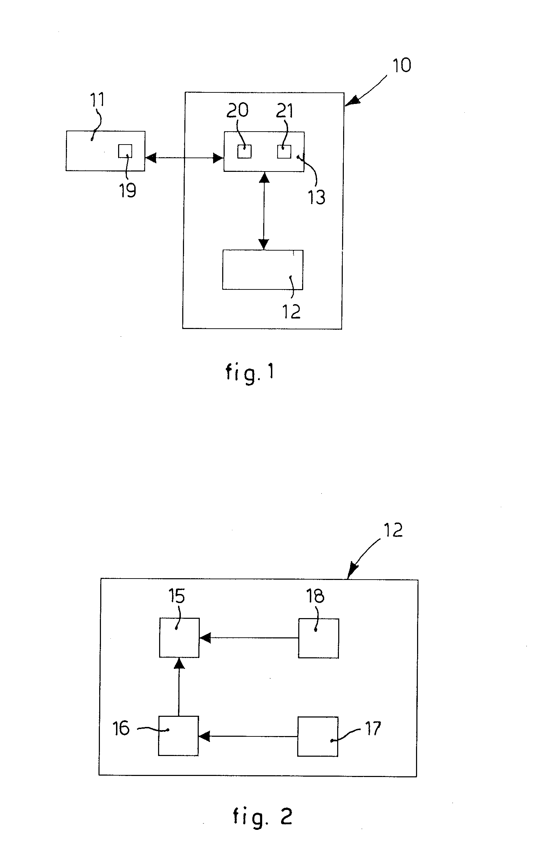

With reference to fig. 1, a training device 10 for learning to drive means of transport used to transport persons, such as buses, taxis, trains, boats and other similar means, or to transport goods such as trucks, vans, trains, boats or suchlike, or used in predefined routes to perform any service whatsoever, comprises a training station 12 and a data processing unit 13.

The means of transport 11 comprises data transmission devices 19, of a known type, able to transmit to the data processing unit 13 information relating to its position, the route taken, the stops made, the traffic conditions or other similar information, useful for monitoring in real time the operating condition of the means of transport 11.

The data processing unit 13 comprises data reception devices 20, of a known type, and is able to receive and process said information in order to obtain, from memorization devices such as a database 21 with which it is provided, corresponding information in graphic and/or numerical form, and to transmit said information to the training station 12.

The information comprises two-dimensional and/or three-dimensional representations of the routes and environmental contexts in which the means of transport 11 can be found in real time, obtained by means of the known technique of virtual reality. Therefore, the trainee sees in virtual form the means of transport 11, its route, the stops that it makes, general points of interest and/or reference, traffic lights, pedestrian crossings, pedestrians and anything else necessary to represent completely the environmental context in which the means of transport 11 actually is. Furthermore, the virtual representation of the real environment where the means of transport 11 operates has a line, easily identifiable, with which the route which he has to take is exactly indicated to the trainee.

The information also comprises cartographic images relating to the current position of the means of transport 11 or numerical type data relating to the journey time of the means of transport 11, possible delays accumulated along the route, the fuel consumption of the means of transport 11, and other similar information.

The training station 12 (fig. 2) comprises a display device 15, able to display said information arriving from the data processing unit 13.

The information can be displayed on the display device 15 in different modes, variable according to the view point selected by the trainee. A first view point is that of the driver in the driving station. In this case a virtual representation is provided of the dashboard and also the internal rear view mirrors of the means of transport 11. A second view point provides a bird's eye view of the route that the means of transport 11 has to follow in its entirety. Other view points provide an external view of the virtual representation of the means of transport 11, moving along the line, a view of the stop that the means of transport 11 has to make, or a helicopter type view, to display portions of the route from above.

The training station also comprises a driving device 16, a set of pedals 17, provided with two pedals, and a command device 18, of a known type, called "space ball".

The driving device 16 and the set of pedals 17 are able to simulate the driving station of the means of transport 11 and are also able to pilot its virtual representation, displayed on the display device 15. Therefore, the two pedals of the set correspond to the accelerator and the brake of the means of transport 11.

The command device 18, on the contrary, is able to be used to manage the "bird's eye view" display mode.

The training station 12 is also able to communicate, by means of communication means and as indicated by the trainee, to the data processing unit 13, information relating to critical situations in which the trainee may be involved during the simulation, such as accidents or obstacles along the route, mechanical problems or other.

The device according to the present invention as described heretofore functions as follows.

The means of transport 11 communicates to the data processing unit 13, by means of known communication means, information relating to its operating condition. The processing unit 13 then processes said information and obtains from the database the corresponding information in graphic and/or numerical form. Subsequently, the data processing unit transmits the information to the training station 12 which displays it on the display device 15. Then, by means of the driving device 16 and the set of pedals 17, the trainee is able to pilot the virtual representation of the means of transport 11 in coordination with the means of transport 11, inside the virtual setting which, according to the indications relating to the real position of the means of transport 11, is constantly up-dated and represented on the display device 15.

Furthermore, the trainee, or the inspector who is controlling the behavior of the trainee, can select the appropriate display mode for the circumstances in which he finds himself. For example, he can select the "bird's eye view" display mode to have an overall view of the route to be traveled, and move inside the virtual context by using the command device 18.

It is clear that modifications and/or additions of parts may be made to the training device for learning to drive a means of transport as described heretofore, without departing from the field and scope of the present invention.

It is also clear that, although the present invention has been described with reference to some specific examples, a person of skill in the art shall certainly be able to achieve many other equivalent forms of training device for learning to drive a means of transport, having the characteristics as set forth in the claims and hence all coming within the field of protection defined thereby.

## Claims

1. Training device for learning to drive a means of transport, in particular public transport or heavy transport, comprising:
- a data processing unit (13) able to receive, from at least a means of transport (11) operating in real operating conditions, information relating to said real operating conditions; and
- a training station (12) provided with means simulating real driving means (16) and display means (15), able to simulate a driving station of said means of transport (11), **characterized in that** said means of transport (11) comprises data transmission means (19), and said data processing unit (13) comprises data reception means (20) to receive in real time the data transmitted by said means of transport (11) and to reproduce, in graphic and/or numerical form and in real time, said real operating conditions so as to condition said means simulating real driving means (16) and said display means (15) of said training station (12), in order to simulate, in real time, said real operating conditions.

2. Device as in claim 1, **characterized in that** said real operating conditions are displayed on said display means (15).

3. Device as in claim 1, **characterized in that** said real operating conditions are reproduced by means of two-dimensional images.

4. Device as in claim 1, **characterized in that** said real operating conditions are reproduced by means of three-dimensional images.

5. Device as in claim 1, **characterized in that** said information relating to said real operating conditions comprises numerical data.

6. Device as in any claim hereinbefore, **characterized in that** said training station (12) is able to transmit to said data processing unit (13) information relating to accidental situations of said means of transport (11) operating in said real operating conditions.

7. Device as in any claim hereinbefore, **characterized in that** said training station comprises a set of pedals (17).

8. Training method for learning to drive a means of transport, by means of a data processing unit (13) able to receive, from at least a means of transport (11) operating in real operating conditions, information relating to said real operating conditions; and by means of a training station (12) provided with means simulating real driving means (16) and display means (15), able to simulate a driving station of said means of transport (11), **characterized in that** said data processing unit (13) receives in real time the data transmitted by said means of transport (11) and reproduces, in graphic and/or numerical form and in real time, said real operating conditions so as to condition said means simulating real driving means (16) and said display means (15) of said training station (12), in order to simulate, in real time, said real operating conditions.

9. Method as in claim 8, **characterized in that** said real operating conditions are displayed on said display means (15).
